# EUROPÄISCHE PATENTSCHRIFT

(11) **EP 2 011 674 B1**
(45) Veröffentlichungstag und Bekanntmachung des Hinweises auf die Patenterteilung: **06.11.2013**
(21) Anmeldenummer: 08156899.0
(22) Anmeldetag: 26.05.2008
(51) Int. Cl.: B60G 21/055

(54) **Stabilisatoranordnung**
Stabiliser assembly
Agencement de stabilisateur

(30) Priorität: 04.07.2007 DE 102007031203
(43) Veröffentlichungstag der Anmeldung: 07.01.2009
(73) Patentinhaber: ZF Friedrichshafen AG, 88038 Friedrichshafen (DE)
(72) Erfinder: Mäder, Fred, 97447 Gerolzhofen (DE)

(56) Entgegenhaltungen:
- EP-A- 1 627 757
- DE-A1- 4 443 809
- DE-A1- 10 148 095
- DE-A1-102006 008 368
- DE-C1- 19 850 169
- FR-A- 2 751 803
- FR-A- 2 874 860

## Beschreibung

Die Erfindung betrifft eine Stabilisatoranordnung gemäß dem Oberbegriff von Patentanspruch 1.

Zur Steigerung des Fahrkomforts ist es bekannt, dass ein Stabilisator im Fahrzeug verstellbar ausgeführt ist. Dazu verwendet man eine Stabilisatoranordnung mit einem Aktuator und einem Stabilisator. Vielfach wird als Aktuator ein hydraulischer Schwenkmotor eingesetzt, mit dem sich zwar mühelos die geforderten Drehmomente zur Stabilisatorverstellung erzeugen lassen, der jedoch eine vergleichsweise aufwändige Energieversorgung mit Pumpe und Ventilen benötigt. Deshalb gibt es vermehrt Stabilisatoranordnungen, bei denen ersatzweise ein E-Motor als Aktuator dient. Um die Baugröße des E-Motors reduzieren zu können, wird zwischen dem E-Motor und dem Stabilisator ein Getriebe eingesetzt. Mit dieser Bauform lassen sich zwar alle fahrdynamischen Vorteile einer Stabilisatoranordnung wie mit einem hydraulischen Schwenkmotor erreichen, doch kann dabei eine vom Getriebe verursachte akustische Störung auftreten.

Bei einer Geradeausfahrt und einem deaktivierten Aktuator ist die Stabilisatoranordnung unverspannt. Hochfrequente Anregungen der Fahrbahnoberfläche werden von den Rädern einer Fahrzeugachse kopiert und übertragen diese Federungsbewegungen über den Stabilisator auf den Aktuator. Dabei kann es zu Klappergeräuschen führen, die für den Fahrzeuginsassen hörbar sind. In diesem Zusammenhang ist die DE 1 98 50 169 C1 zu nennen.

Aus der DE 10 2006 008 368 A1 ist eine Stabilisatoranordnung bekannt, die neben der Federwirkung der Stabilisatorabschnitte noch eine zusätzliche Feder aufweist, um insgesamt eine kleinere Federrate der gesamten Stabilisatoranordnung zu erreichen.

Die DE 44 43 809 A1 beschreibt eine Stabilisatoranordnung bei der neben einem hydraulischen Aktuator eine Schraubendruckfeder verwendet wird, die über den abgewinkelten Stabilisatorabschnitt eine Torsionskraft wirksam werden lässt.

Die Aufgabe der vorliegenden Erfindung besteht darin, die aus dem Stand der Technik bekannten Geräuschprobleme im Aktuator zu beheben.

Erfindungsgemäß wird die Aufgabe durch die Merkmale des Patentanspruchs 1 gelöst.

Der Torsionsdämpfer minimiert die mechanischen Geräusche innerhalb des Getriebes, wobei die Auslegung des Torsionsdämpfers derart vorgenommen wird, dass die Federrate der Stabilisatoranordnung möglichst nicht merklich reduziert wird.

Die fensterförmigen Öffnungen sind derart dimensioniert, dass möglichst kein radialer Kontakt zwischen Elastomerfeder und Primärteil vorliegen kann, um die Elastomerfeder vor übermäßigem Verschleiß zu schützen.

Durch die diese Platzierung muss der Torsionsdämpfer nicht für das volle des von den Rädern verursachten Anregungsmoments ausgelegt sein, da das Anregungsmoment von dem Getriebe ebenfalls heruntergestuft wird.

Gemäß einem vorteilhaften Unteranspruch ist das Getriebe als ein Planetengetriebe ausgeführt ist, wobei der Torsionsdämpfer als Planetenradträger ausgeführt ist, in dem mindestens ein Planetenrad befestigt ist. Diese Auslegung des Torsionsdämpfers ermöglicht eine besonders raumsparende Gestaltung des Torsionsdämpfers.

Dazu ist in dem Sekundärteil mindestens ein bogenförmiges Fenster für mindestens eine Achse des besagten Planetenrades ausgeführt.

Des Weiteren ist das Sekundärteil mit einer Getriebewelle verbunden und das Primärteil auf dem Sekundärteil schwenkbar gelagert. Diese Anordnung des Sekundärteils mit dem Primärteil fördert ebenfalls eine kompakte Bauform. Dabei ist das Primärteil auf einer Nabe des Sekundärteils gelagert.

Alternativ oder zusätzlich zu der Abstützung der Feder mittels der fensterförmigen Öffnungen im Primärteil kann der mindestens eine Elastomerkörper auf dem Sekundärteil stoffschlüssig befestigt sein. Diese Lösung bietet zusätzlich eine raumsparende axiale Sicherung des Elastomerkörpers innerhalb des Torsionsdämpfers.

Anhand der folgenden Figuren soll die Erfindung näher erläutert werden.

Es zeigt:
- Fig. 1: Gesamtdarstellung der Stabilisatoranordnung
- Fig. 2: Schnittdarstellung durch den Aktuator der Stabilisatoranordnung
- Fig. 3: Torsionsdämpfer als Einzelteil
- Fig. 4: Rückansicht des Sekundärteils
- Fig. 5: Rückseite des Sekundärteils mit Planetenrädern
- Fig. 6: Sekundärteil mit Federn
- Fig. 7: Primärteil als Einzelteil

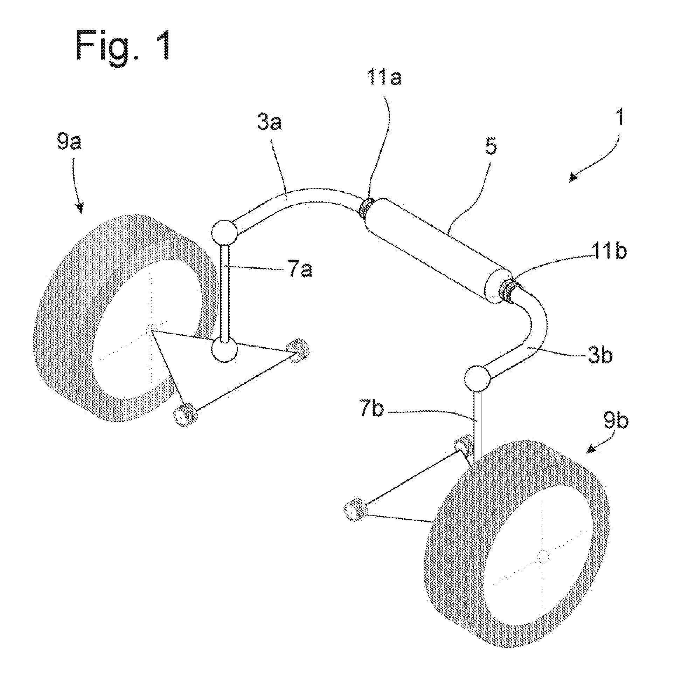

Die Figur 1 zeigt ein Prinzipschaubild einer Stabilisatoranordnung 1, die einen zweigeteilten Stabilisator mit Stabilisatorabschnitten 3a; 3b und einen zwischen den beiden Stabilisatorabschnitten angeordneten Aktuator 5 umfasst. Jeweils ein Stabilisatorabschnitt 3a; 3b ist über eine Pendelstütze 7a; 7b mit einem Fahrzeugrad 9a; 9b verbunden. Zwei Stabilisatorlager 11 a; 11 b verbinden die Stabilisatoranordnung mit einem nicht dargestellten Fahrzeugaufbau. Bei einer Ein- oder Ausfederungsbewegung eines der Fahrzeugräder 9a; 9b wird der entsprechende Stabilisatorabschnitt 3a; 3b in Abhängigkeit der Längenverhältnisse auf Biegung und/oder Torsion beansprucht.

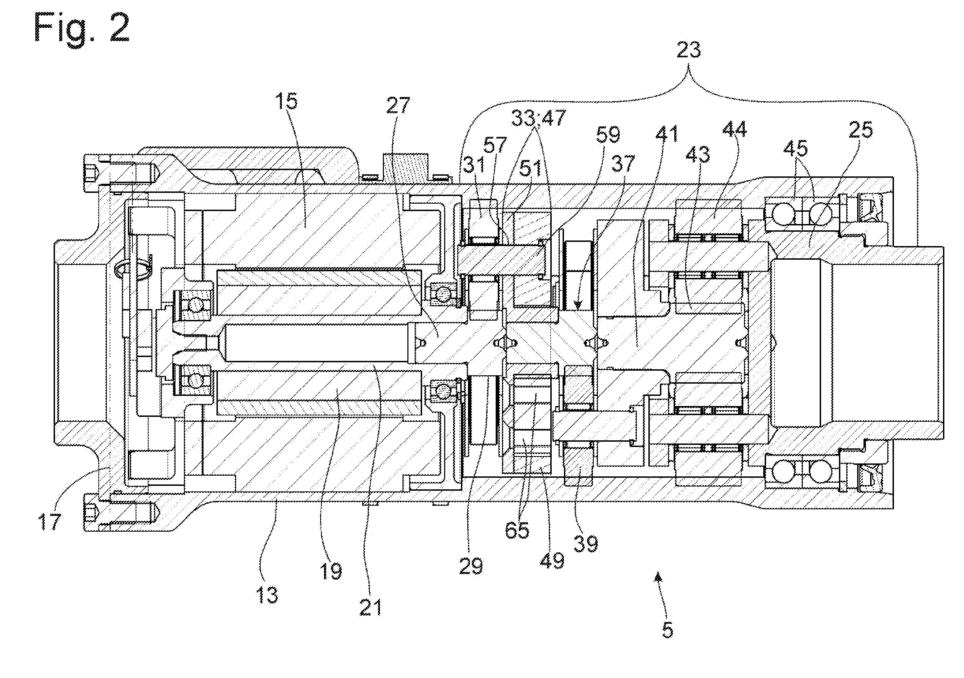

Wie in Fig. 2 dargestellt, ist in einem Gehäuse 13 des Aktuators 5 ein Elektromotor installiert, dessen Stator 15 sich an der Innenwandung abstützt. Endseitig verschließt ein Deckel 17 das Gehäuse 13. An dem Deckel 17 ist beispielsweise der Stabilisatorabschnitt 3a befestigt. Koaxial zum Stator 15 ist ein Rotor 19 gelagert, dessen Rotorwelle 21 mit einem mehrstufigen, in diesem Fall dreistufigen Getriebe 23 verbunden ist. Das Getriebe 23 ist als ein Planetenradgetriebe ausgeführt, wobei ein Planetenradträger 25 der letzten Getriebestufe z. B. mit dem Stabilisatorabschnitt 3b verbunden ist.

Eine erste Getriebestufe, die von der Rotorwelle 21, verbunden mit einer ersten Getriebewelle 27, angetrieben wird, umfasst ein erstes Sonnenrad 29, das mit mehreren Planetenrädern 31 eines ersten Planetenradträgers 33 kämmt. Der erste Planetenradträger 33 ist verdrehfest mit einer zweiten Getriebewelle 35 einer zweiten Getriebestufe verbunden, die ein zweites Sonnenrad 37 trägt, das mit Planetenrädern 39 eines zweiten Planetenradträgers auf einer dritten Getriebewelle 41 zusammenwirkt. Ein Planetenradsatz 44 auf dem Sonnenrad 43 der dritten Getriebewelle 41 greift in den Planetenradträger 25 ein. Der Planetenradträger 25 ist über einen Lagersatz 45 im Gehäuse 13 geführt. Bei allen Planetenrädern 31; 39 und 44 übernimmt eine Verzahnung an der Innenwandung des Gehäuses 13 die Funktion eines Hohlrades für die jeweilige Getriebestufe.

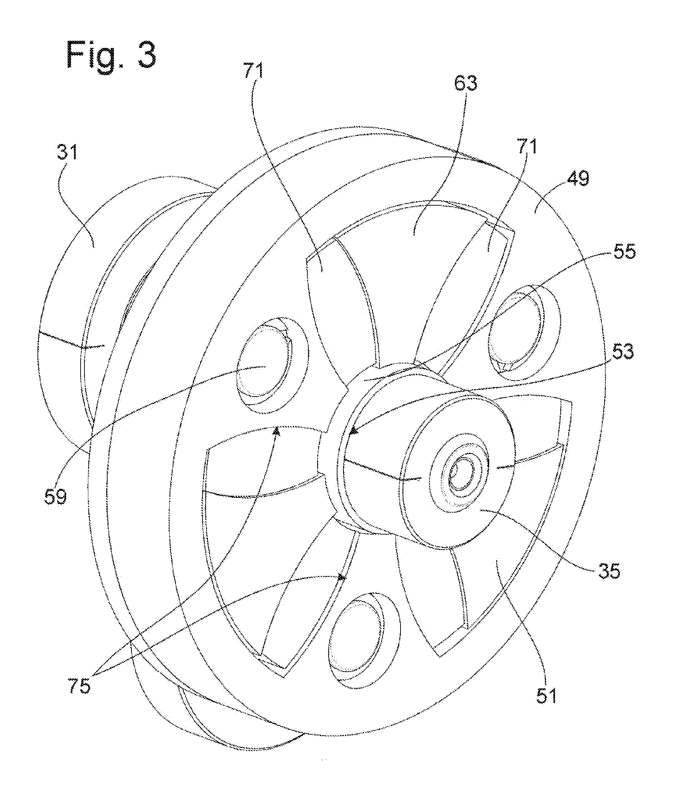

Bei einer Bestromung des Elektromotors verdreht sich der Rotor 19 zum Stator 15 und treibt das mehrstufige Getriebe 23 an. Dadurch verdreht sich der Planetenradträger 25 zum Deckel 17, an dem ebenfalls ein Stabilisatorabschnitt befestigt ist. Andererseits können bei unbestromtem Elektromotor die Stabilisatorabschnitte 3a; 3b, angeregt durch Fahrbahnunebenheiten, die von den Rädern aufgenommen werden, auch die Getriebestufen in Bewegung setzen. Durch die ständige Schwenkbewegungsrichtungsänderung ändert sich genauso die Drehbewegung der einzelnen Getriebekomponenten. Die Massenträgheit des Rotors 19; 21 wirkt als Stützmoment am Getriebe, so dass die Schwenkbewegungen aufgrund eines unvermeidlichen Getriebespiels ein Getriebegeräusch verursachen könnten. Um diesem Getriebegeräusch entgegenzuwirken, ist zwischen dem Aktuator und der Anbindung des Getriebes an einem Stabilisatorabschnitt ein Torsionsdämpfer 47 angeordnet. Der Torsionsdämpfer ist in diesem Ausführungsbeispiel Bestandteil des mehrstufigen Getriebes und verfügt über ein Primärteil 49 und ein Sekundärteil 51, die sich zueinander verdrehen können. Zwischen dem Primärteil und dem Sekundarteil ist mindestens eine Feder (Fig. 3) verspannbar.

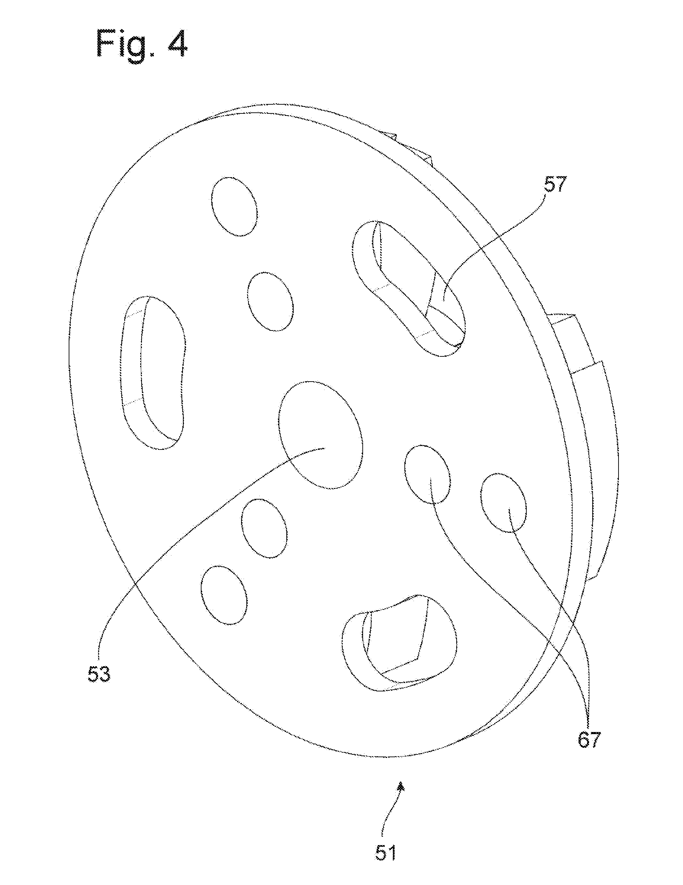

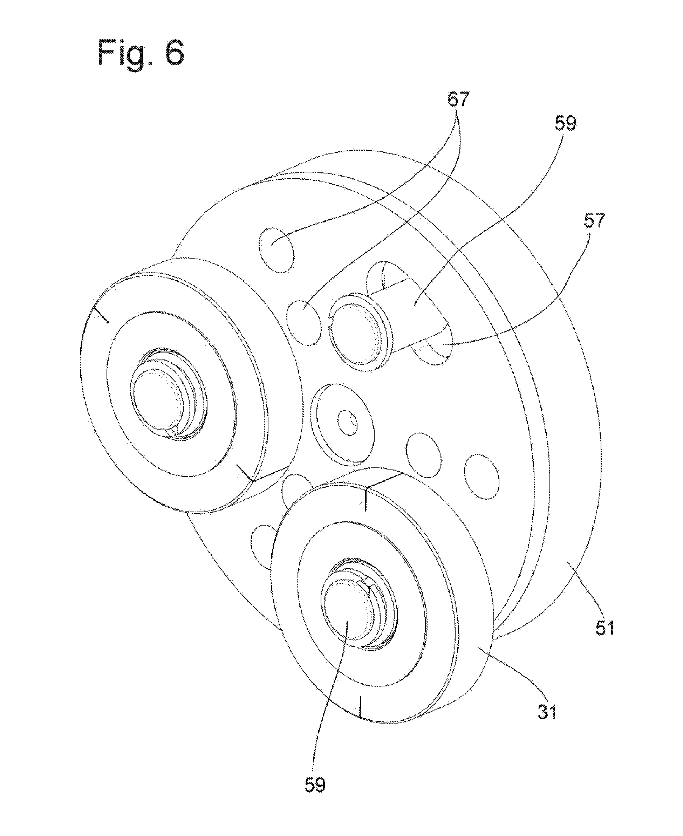

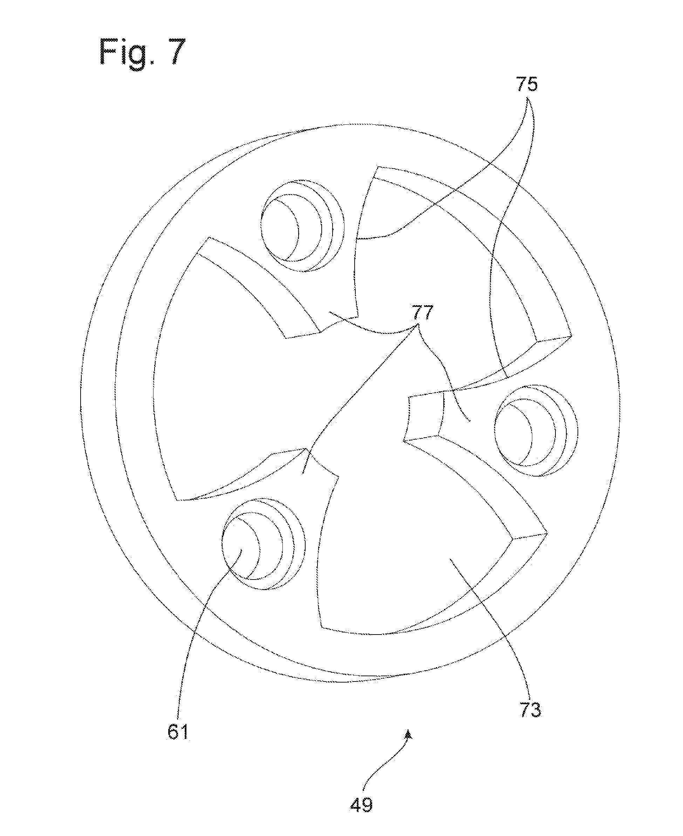

Der Torsionsdämpfer 47 wird von dem ersten Planetenradträger 33 gebildet. Aus der Zusammenschau der Figuren 3 bis 7 wird der Aufbau verständlicher. Das Sekundärteil 51 verfügt über eine Aufnahmeöffnung 53 für die drehfeste Verbindung mit der zweiten Getriebewelle 35. Auf seiner Vorderseite erstreckt sich die Aufnahmeöffnung 53 durch eine Nabe 55. Des Weiteren sind in dem Sekundärteil 51 bogenförmige Fenster 57 für jeweils eine Achse 59 der besagten ersten Planetenräder 31 ausgeführt. In der Figur 6 ist die Rückseite des Sekundärteils 51 mit Planetenrädern 31 und einer freien Achse 59 dargestellt. Auf der Nabe 55 des Sekundärteils 51 ist das Primärteil 49 schwenkbar gelagert. In dem Primärteil 49, Fig. 7, sind Halteöffnungen 61 für die Achsen 59 der Planetenräder 31 ausgeführt.

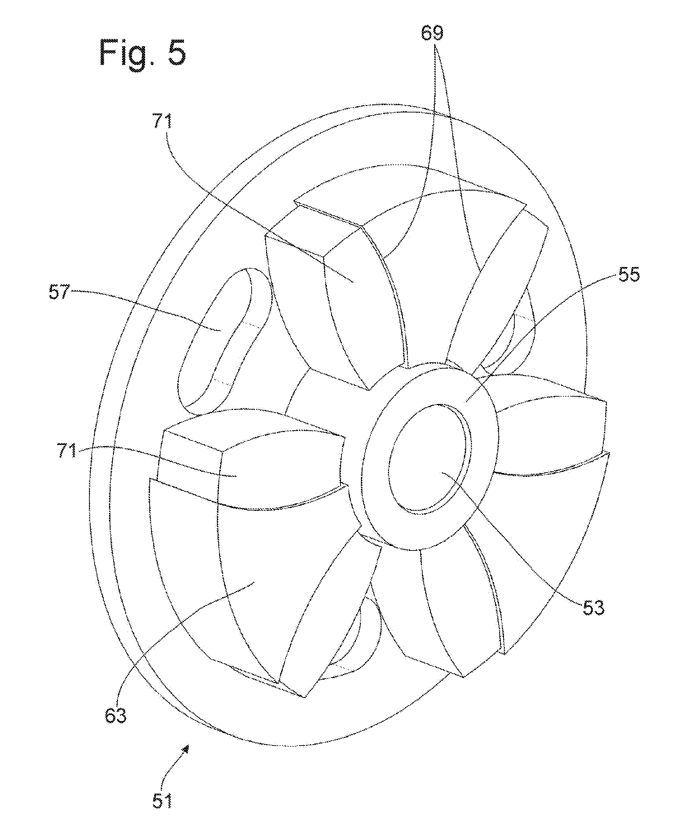

Das Sekundärteil 51 verfügt auf der Vorderseite, Fig. 5; über mehrere Übertragungssegmente 63, die sich über Stützbolzen 65; Fig. 2, in Öffnungen 67 des Sekundärteils 51 abstützen. An jeweils einer Seitenfläche 69 eines Übertragungssegments 63 liegt eine Feder 71 in der Bauform einer Elastomerfeder an. Die bogenförmigen Fenster 57 für die Planetenradachsen wiederum erstrecken sich zwischen zwei Übertragungssegmenten 63 und den daran anliegenden Federn 71. Die Elastomerfedern 71 sind bevorzugt stoffschlüssig, z. B. durch Kleben oder Vulkanisieren mit dem Sekundärteil 51 verbunden.

Als Primärteil 49 dient ein scheibenförmiger Körper mit jeweils einer fensterförmigen Öffnung 73 für jeweils ein Übertragungssegment 63 und beidseitige Elastomerkörper 71, die an Seitenwandungen 75 der Öffnung 73 anliegen (Fig. 3). Die fensterförmigen Öffnungen 73 werden nach radial innen durch rippenförmige Stege 77 getrennt, wobei diese Stege 77 auf der Nabe 55 des Sekundärteils 51 anliegen können. In jeweils einem Steg 77 ist eine Halteöffnung 61 für die Achse 59 eines Planetenrades 31 ausgeführt. Zur radialen Fixierung des Primärteils zum Sekundärteil bestehen zwei Möglichkeiten. Man kann die Stege 77 auf der Nabe 55 zur Zentrierung beider Teile 49; 51 verwenden. Alternativ ist das Primärteil 49 über die mindestens eine Achse 59 des Planetenrades 31 in dem bogenförmigen Fenster 57 zum Sekundärteil 51 radial geführt ist. Die radiale Breite der Fenster 57 ist nur geringfügig größer als der Durchmesser der Achse 59.

Bei einer Getriebebewegung, die z. B. von dem Stabilisatorabschnitt 3b am Anschluss des Planetenradträgers 25 ausgeht, setzt sich der Drehmomentfluss über die Getriebestufen bis zum Rotor 19 fort. Dabei kann sich das Sekundärteil 51 zusammen mit der zweiten Getriebewelle relativ zum Primärteil 49 des ersten Planetenradträger 33 bzw. des Torsionsdämpfer 47 verdrehen. Zwar stützt sich der erste Planetenrädersatz 31 über das Trägheitsmoment der Rotorwelle 19 ab, doch wird das zum geringfügigen Verdrehen des Sekundärteils 51 notwendige Drehmoment durch den Einsatz der Elastomerkörper verkleinert, so dass die äußere Anregung des Getriebes über den Planetenradträger 25 keine Anschlaggeräusche verursacht.

## Patentansprüche

1. Stabilisatoranordnung(1) umfassend einen zweigeteilten Stabilisator, dessen Stabilisatorabschnitte(3a; 3b) eine rotatorische Relativbewegung zueinander ausführen und bei einer gegensinnigen Verdrehbelastung eine Rückstellkraft ausüben, die mittels eines Aktuators (5) in Verbindung mit einem Getriebe (23) einstellbar ist, wobei die Stabilisatoranordnung unabhängig von einer Torsionsfederwirkung der Stabilisatorabschnitte (3a; 3b) mindestens eine weitere Feder (71) aufweist, die eine Torsionsfederwirkung bewirkt, wobei die mindestens eine Feder (71) Bestandteil eines Torsionsdämpfers (47) ist, der ein Primärteil (49) und ein Sekundärteil (51) aufweist, die sich zueinander verdrehen können, wobei die mindestens eine Feder (71) zwischen dem Primärteil (49) und dem Sekundärteil (51) verspannbar ist und der Torsionsdämpfer (47) zwischen dem Aktuator (15; 19) und der Anbindung des Getriebes (23) an den Stabilisatorabschnitt (3b) angeordnet ist,
**dadurch gekennzeichnet,**
**dass** das Primärteil (49) mindestens eine fensterförmige Öffnung (73) aufweist, in die mindestens ein Übertragungssegment (63) des Sekundärteils (51) eingreift, wobei zwischen einer Seitenwandung (75) der Öffnung (73) und einer Seitenfläche (69) eines Übertragungssegments (63) die Feder (71) angeordnet ist, die als ein Elastomerkörper ausgeführt ist.

2. Stabilisatoranordnung nach Anspruch 1,
**dadurch gekennzeichnet,**
**dass** das Getriebe (23) als ein Planetengetriebe ausgeführt ist, wobei der Torsionsdämpfer (47) als Planetenradträger (33) ausgeführt ist, in dem mindestens ein Planetenrad (31) befestigt ist.

3. Stabilisatoranordnung nach Anspruch 2,
**dadurch gekennzeichnet,**
**dass** in dem Sekundärteil (51) mindestens ein bogenförmiges Fenster (57) für mindestens eine Achse (59) des besagten Planetenrades (31) ausgeführt ist.

4. Stabilisatoranordnung nach Anspruch 1,
**dadurch gekennzeichnet,**
**dass** Sekundärteil (51) mit einer Getriebewelle (35) verbunden und das Primärteil (49) auf dem Sekundärteil (51) schwenkbar gelagert ist.

5. Stabilisatoranordnung nach Anspruch 4,
**dadurch gekennzeichnet,**
**dass** das Primärteil (49) auf einer Nabe (55) des Sekundärteils (51) gelagert ist.

6. Stabilisatoranordnung nach den Ansprüchen 3 und 4,
**dadurch gekennzeichnet,**
**dass** das Primärteil (49) über die mindestens eine Achse (59 des Planetenrades (31) in dem bogenförmigen Fenster (57) zum Sekundärteil (51) radial geführt ist.

7. Stabilisatoranordnung nach Anspruch 1,
**dadurch gekennzeichnet,**
**dass** der mindestens eine Elastomerkörper (71) auf dem Sekundärteil (51) stoffschlüssig befestigt ist.

## Claims

1. Stabilizer arrangement (1) comprising a two-part stabilizer, the stabilizer sections (3a; 3b) of which perform a rotational relative movement with respect to one another and exert a restoring force in the event of a rotational loading in opposite directions, which restoring force can be adjusted by means of an actuator (5) in conjunction with a gearing (23), wherein the stabilizer arrangement has, independently of a torsion spring action of the stabilizer sections (3a; 3b), at least one further spring (71) which imparts a torsion spring action, wherein the at least one spring (71) is a constituent part of a torsion damper (47) which has a primary part (49) and a secondary part (51) which can rotate relative to one another, wherein the at least one spring (71) can be braced between the primary part (49) and the secondary part (51) and the torsion damper (47) is arranged between the actuator (15; 19) and the connection of the gearing (23) to the stabilizer section (3b),
**characterized**
**in that** the primary part (49) has at least one window-like opening (73) into which at least one transmission segment (63) of the secondary part (51) engages, wherein the spring (71), which is in the form of an elastomer body, is arranged between a side wall (75) of the opening (73) and a side surface (69) of a transmission segment (63).

2. Stabilizer arrangement according to Claim 1,
**characterized**
**in that** the gearing (23) is in the form of a planetary gear set, wherein the torsion damper (47) is in the form of a planet gear carrier (33) in which at least one planet gear (31) is fastened.

3. Stabilizer arrangement according to Claim 2,
**characterized**
**in that** at least one arcuate window (57) for at least one axle (59) of the said planet gear (31) is formed in the secondary part (51).

4. Stabilizer arrangement according to Claim 1,
**characterized**
**in that** the secondary part (51) is connected to a gearing shaft (35), and the primary part (49) is pivotably mounted on the secondary part (51).

5. Stabilizer arrangement according to Claim 4,
**characterized**
**in that** the primary part (49) is mounted on a hub (55) of the secondary part (51).

6. Stabilizer arrangement according to Claims 3 and 4,
**characterized**
**in that** the primary part (49) is guided radially with respect to the secondary part (51) by means of the at least one axle (59) of the planet gear (31) in the arcuate window (57).

7. Stabilizer arrangement according to Claim 1,
**characterized**
**in that** the at least one elastomer body (71) is fastened cohesively to the secondary part (51).

## Revendications

1. Agencement de stabilisateur (1) comprenant un stabilisateur en deux parties, dont les portions de stabilisateur (3a ; 3b) effectuent un mouvement de rotation relatif l'une par rapport à l'autre et exercent une force de rappel en cas de contrainte de rotation en sens inverse, la force de rappel pouvant être ajustée au moyen d'un actionneur (5) en liaison avec une transmission (23), l'agencement de stabilisateur présentant, indépendamment d'un effet de ressort de torsion des portions de stabilisateur (3a ; 3b), au moins un ressort supplémentaire (71), qui provoque un effet de ressort de torsion, l'au moins un ressort (71) faisant partie d'un amortisseur de torsion (47) qui présente une partie primaire (49) et une partie secondaire (51), lesquelles peuvent tourner l'une par rapport à l'autre, l'au moins un ressort (71) pouvant être serré entre la partie primaire (49) et la partie secondaire (51) et l'amortisseur de torsion (47) étant disposé entre l'actionneur (15 ; 19) et la liaison de la transmission (23) à la portion de stabilisateur (3b),
**caractérisé en ce que**
la partie primaire (49) présente au moins une ouverture en forme de fenêtre (73), dans laquelle s'engage au moins un segment de transfert (63) de la partie secondaire (51), le ressort (71) étant disposé entre une paroi latérale (75) de l'ouverture (73) et une surface latérale (69) d'un segment de transfert (63) et étant réalisé sous forme de corps élastomère.

2. Agencement de stabilisateur selon la revendication 1,
**caractérisé en ce que**
la transmission (23) est réalisée sous forme d'engrenage planétaire, l'amortisseur de torsion (47) étant réalisé sous forme de porte-satellites (33) dans lequel est fixé au moins un satellite (31).

3. Agencement de stabilisateur selon la revendication 2,
**caractérisé en ce**
**qu'**au moins une fenêtre de forme arquée (57) est réalisée dans la partie secondaire (51) pour au moins un axe (59) dudit satellite (31).

4. Agencement de stabilisateur selon la revendication 1,
**caractérisé en ce que**
la partie secondaire (51) est connectée à un arbre de transmission (35) et la partie primaire (49) est montée de manière pivotante sur la partie secondaire (51).

5. Agencement de stabilisateur selon la revendication 4,
**caractérisé en ce que**
la partie primaire (49) est montée sur un moyeu (55) de la partie secondaire (51).

6. Agencement de stabilisateur selon les revendications 3 et 4,
**caractérisé en ce que**
la partie primaire (49) est guidée radialement vers la partie secondaire (51) par le biais de l'au moins un axe (59) du satellite (31) dans la fenêtre de forme arquée (57).

7. Agencement de stabilisateur selon la revendication 1,
**caractérisé en ce que**
l'au moins un corps élastomère (71) est fixé par engagement par coopération de forme sur la partie secondaire (51).
